(19) Europäisches Patentamt
European Patent Office
Office européen des brevets

(11) EP 2 988 411 A1

(12) EUROPEAN PATENT APPLICATION

(43) Date of publication:
24.02.2016 Bulletin 2016/08

(51) Int Cl.:
*H02P 6/18* (2016.01)  *H02P 8/14* (2006.01)

(21) Application number: 15181283.1

(22) Date of filing: 17.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 20.08.2014 JP 2014167579

(71) Applicant: Ricoh Company, Ltd.
Tokyo 143-8555 (JP)

(72) Inventors:
• Suzuki, Haruyuki
  Tokyo, 143-8555 (JP)
• Yamamoto, Norihiro
  Tokyo, 143-8555 (JP)
• Muranaka, Masayuki
  Tokyo, 143-8555 (JP)

(74) Representative: Maury, Richard Philip
Marks & Clerk LLP
90 Long Acre
London WC2E 9RA (GB)

(54) **MOTOR DRIVE CONTROL APPARATUS AND MOTOR DRIVE CONTROL METHOD**

(57) A motor drive control apparatus supplies drive currents including orthogonal alternating current components to armature coils of a motor so that a magnetized rotor is rotated. The motor drive control apparatus includes a high frequency generator that generates a high frequency signal which is superimposed on one of the drive currents, a position estimator that receives position information indicating an estimated position of the rotor based on a response signal to the high frequency signal, and an amplitude controller that controls amplitudes of the drive currents according to the position information.

FIG.1

**Description**

BACKGROUND OF INVENTION

1. Field of the Invention

The present invention relates to a motor drive control apparatus and a motor drive control method.

2. Description of the Related Art

In a stepping motor according to the related art, a magnetizing current with 90-degree different phases flows through two armature coils (two phases) and the magnetizing current phases are advanced alternately so that an electromagnetic torque is generated to rotate the magnetized rotor. The stepping motor normally rotates in this way in accordance with the changes of the magnetizing current phases, and the rotational speed of the motor is controlled by open loop control without using a sensor such as an encoder.

In recent years, a stepping motor drive controller is proposed in which an electrical angle (i.e., a rotor's phase angle) is estimated based on a magnetizing current flowing through armature coils of a stepping motor, and the rotational speed of the motor is controlled by closed loop control based on the estimated phase angle without using a sensor to detect a position of the rotor. For example, see Japanese Laid-Open Patent Publication No. 2009-213244.

In the closed loop control of the stepping motor according to the related art, the position of the rotor is estimated based on the estimated induction voltage, and when the rotational speed of the stepping motor is low, or when the motor rotation is stopped, the magnetizing current flowing through the armature coils decreases, which will make the estimation of the rotor position difficult. To avoid this, in such cases, the known motor drive controller is adapted to change the stepping motor control from the closed loop control to the open loop control.

Hence, in the known motor drive controller, when the rotational speed of the stepping motor is low or when the motor rotation is stopped, the magnetizing current is always supplied to the armature coils, and the power consumption is high.

SUMMARY OF INVENTION

In one aspect, the invention provides a motor drive control apparatus which is capable of contributing to reduction of the power consumption.

In an embodiment, the invention provides a motor drive control apparatus which supplies drive currents including orthogonal alternating current components to armature coils of a motor so that a magnetized rotor is rotated and includes: a high frequency generator that generates a high frequency signal which is superimposed on one of the drive currents; a position estimator that receives position information indicating an estimated position of the rotor based on a response signal to the high frequency signal; and an amplitude controller that controls amplitudes of the drive currents according to the position information.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

BRIEF DESCRIPTION OF THE DRAWINGS

FIG. 1 is a block diagram showing a motor drive control apparatus according to a first embodiment.
FIG. 2 is a diagram showing a structure of a stepping motor.
FIG. 3 is a partial sectional view of a stepping motor.
FIG. 4 is a diagram for explaining a relationship between a coil inductance of a motor and a phase angle of a rotor.
FIG. 5 is a diagram showing a configuration of a position feedback controller.
FIG. 6 is a diagram showing a configuration of a d-axis current controller.
FIG. 7 is a diagram showing a configuration of a q-axis current controller.
FIG. 8 is a diagram for explaining operation of a vector rotation unit.
FIG. 9 is a diagram for explaining operation of the vector rotation unit.
FIG. 10 is a diagram for explaining operation of another vector rotation unit.
FIG. 11 is a diagram showing a configuration of a position estimator.
FIG. 12 is a diagram showing a signal waveform of an estimated position error "th_err" and a q-axis current vector.

FIG. 13 is a diagram showing another example of the position feedback controller.

FIG. 14 is a block diagram showing a motor drive control apparatus according to a second embodiment.

FIG. 15 is a block diagram showing a motor drive control apparatus according to a third embodiment.

DETAILED DESCRIPTION OF THE PREFERRED EMBODIMENTS

A description will be given of embodiments with reference to the accompanying drawings.

[First Embodiment]

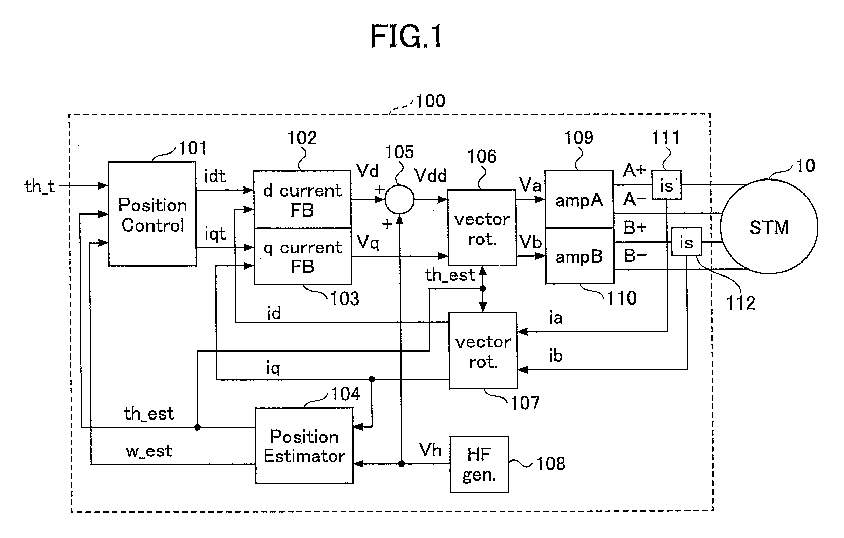

FIG. 1 is a diagram showing a motor drive control apparatus 100 according to a first embodiment.

The motor drive control apparatus 100 shown in FIG. 1 controls drive of a stepping motor 10. For example, in the stepping motor (STM) 10 , alternating current components with 90-degree different phases flow through two excitation coils of A phase and B phase so that a permanent magnet rotor is rotated. The stepping motor 10 (which will be called the motor 10) is configured to be salient. A salient stepping motor means that the motor has characteristics such that the inductances of motor coils vary according to the position of the rotor. The details of the motor 10 will be described later.

As shown in FIG. 1, the motor drive control apparatus 100 includes a position feedback controller 101, a d-axis current controller 102, a q-axis current controller 103, a position estimator 104, an adder 105, a pair of vector rotation units 106 and 107, a high frequency generator 108, a pair of amplifiers 109 and 110, and a pair of current sensors 111 and 112. Note that the current sensors 111 and 112 may be arranged outside the motor drive control apparatus 100.

The motor drive control apparatus 100 supplies to the motor 10 a current which is created by superimposing a high frequency component generated by the high frequency generator 108 on a drive current to drive the motor 10. In the motor drive control apparatus 100, the position estimator 104 estimates a rotor position of the motor 10 based on response signals to the high frequency component detected by the current sensors 111 and 112.

Hence, in this embodiment, even when the drive current supplied to the motor 10 is very small, the response signals to the high frequency component are detected and the position of the rotor may be estimated based on the response signals.

According to the motor drive control apparatus 100 of this embodiment, when the rotational speed of the motor is low, or when the motor rotation is stopped, an estimated position of the rotor may be obtained by the closed loop control without using a sensor, such as an encoder, which detects the position of the rotor.

The position feedback controller 101 compares position information "th_est" indicating an estimated current position of the rotor with a target position instruction value "th_t", and outputs target amplitude values "idt" and "iqt" of the drive current based on the result of the comparison. By this control, the amplitude of the drive current is controlled so that the position information "th_est" is in agreement with the target position instruction value "th_t" to control the position of the rotor.

In this embodiment, when the target position instruction value "th_t" increases or decreases by a fixed amount per unit time, the position of the rotor is controlled such that the position information "th_est" increases or decreases by a fixed amount per unit time. Hence, the rotational speed of the rotor of the motor 10 is maintained at a fixed level. Moreover, in this embodiment, when the target position instruction value "th_t" remains unchanged at a fixed value, the position information "th_est" is also maintained to indicate a fixed position (or the current position of the rotor is maintained).

The d-axis current controller 102 outputs a d-axis drive voltage "Vd" such that a d-axis current vector "id" detected by the vector rotation unit 107 is in agreement with a target amplitude value "idt" of a d-axis drive current. The q-axis current controller 103 outputs a q-axis drive voltage "Vq" such that a q-axis current vector "iq" detected by the vector rotation unit 107 is in agreement with a target amplitude value "iqt" of a q-axis drive current. It is preferred that the d-axis current controller 102 and the q-axis current controller 103 are implemented by proportional-integral-derivative (PID) controllers which perform a proportional-integral-derivative (PID) control.

The position estimator 104 estimates a position (electrical angle) and a rotational speed of the rotor of the motor 10 based on the high frequency component superimposed on the q-axis drive current, and outputs position information (angle) "th_est" indicating an estimated position of the rotor and speed information "w_est" indicating an estimated rotational speed of the rotor. The details of the position estimator 104 will be described later.

The adder 105 adds the d-axis drive voltage "Vd" and the high frequency signal "Vh". Note that the frequency of the high frequency signal "Vh" is sufficiently higher than a product of the rotational speed of the rotor and the number of magnetic pole pairs (which product is equivalent to a motor coil driving frequency). The details of the frequency of the high frequency signal "Vh" will be described later.

The vector rotation unit 106 performs a rotation of each of the d-axis drive voltage "Vd" and the q-axis drive voltage "Vq" through the position information (angle) "th_est", and outputs a drive voltage vector "Va" of A phase and a drive voltage vector "Vb" of B phase. The following Equation 1 represents the rotation performed by the vector rotation unit 106.

Equation 1:

$$\begin{pmatrix} Va \\ Vb \end{pmatrix} = \begin{pmatrix} \cos(th) & -\sin(th) \\ \sin(th) & \cos(th) \end{pmatrix} \begin{pmatrix} Vd \\ Vq \end{pmatrix}$$

The drive voltage "Vd" and the drive voltage "Vq" are the drive voltages output from the d-axis current controller 102 and the q-axis current controller 103, and these voltages have a signal waveform similar to a direct current waveform. In this embodiment, the drive voltage vectors "Va" and "Vb" are rotated by the angle "th_est" which is equivalent to the angle of the rotor, and the drive voltage vectors "Va" and "Vb" become alternating current signals.

The vector rotation unit 107 performs a rotation of each of a detection current vector "ia" (detected for A phase) and a detection current vector "ib" (detected for B phase) through the angle "th_est", and outputs the d-axis current vector "id" and the q-axis current vector "iq". The following Equation 2 represents the rotation performed by the vector rotation unit 107.

Equation 2:

$$\begin{pmatrix} id \\ iq \end{pmatrix} = \begin{pmatrix} \cos(th) & \sin(th) \\ -\sin(th) & \cos(th) \end{pmatrix} \begin{pmatrix} ia \\ ia \end{pmatrix}$$

The direction of the vector rotation performed by the vector rotation unit 106 is opposite to the direction of the vector rotation performed by the vector rotation unit 107. The detection current vectors "ia" and "ib" are equivalent to the coil currents, and these current vectors serve as alternating current signals having a motor coil driving frequency corresponding to the rotational speed of the rotor multiplied by the number of magnetic pole pairs. In this embodiment, the rotations of the detection current vectors "ia" and "ib" through the angle "th_est" (which is equivalent to the rotor angle) are performed, and the d-axis current vector "id" and the q-axis current vector "iq" are considered as direct current signals.

The high frequency generator 108 generates and outputs the high frequency signal "Vh" which is superimposed on the drive voltage. The high frequency signal "Vh" has a fixed frequency, and the fixed frequency of the high frequency signal "Vh" is assumed to be sufficiently higher than the product (the motor coil driving frequency) of the rotational speed of the rotor and the number of magnetic pole pairs.

In this embodiment, the high frequency signal "Vh" is generated as described above, and the separation of a response signal to the high frequency component from the driving signal (the drive current) may be easily performed by the position estimator 104, and the accuracy of estimation of the position of the rotor may be increased. Moreover, in this embodiment, the high frequency signal "Vh" is generated as described above, and the mechanical response of the motor 10 may be prevented and the influence on the rotor position and speed control may be reduced.

Furthermore, in this embodiment, if the frequency of the high frequency signal "Vh" is set to a frequency beyond the range of human hearing, occurrence of an undesired audible noise may be prevented. The high frequency signal "Vh" may have a sinusoidal waveform or a square waveform. Moreover, the high frequency signal "Vh" may be a periodic signal having another waveform.

The amplifier 109 converts the A-phase drive voltage vector "Va" into voltages (e.g., voltages A+, A- in FIG. 1) which are supplied to the armature coils of the motor 10. The amplifier 110 converts the B-phase drive voltage vector "Vb" into voltages (e.g., voltages B+, B- in FIG. 1) which are supplied to the armature coils of the motor 10. The voltages A+ and A- are reverse phase signals, and the voltages B+ and B- are reverse phase signals. For example, the amplifiers 109 and 110 may be implemented by linear power amplifiers, PWM (pulse width modulation) inverters, etc.

The current sensor 111 detects the A-phase coil current and outputs the detection current vector "ia". The current sensor 112 detects the B-phase coil current and outputs the detection current vector ib. For example, each of the current sensors 111 and 112 may be implemented by a resistor of low resistance connected in series to the coil drive wires or the bus bars of the amplifiers 109 and 110 (which functions as a differential amplifier at the ends of the resistor), or by a magnetic sensor such as a Hall element.

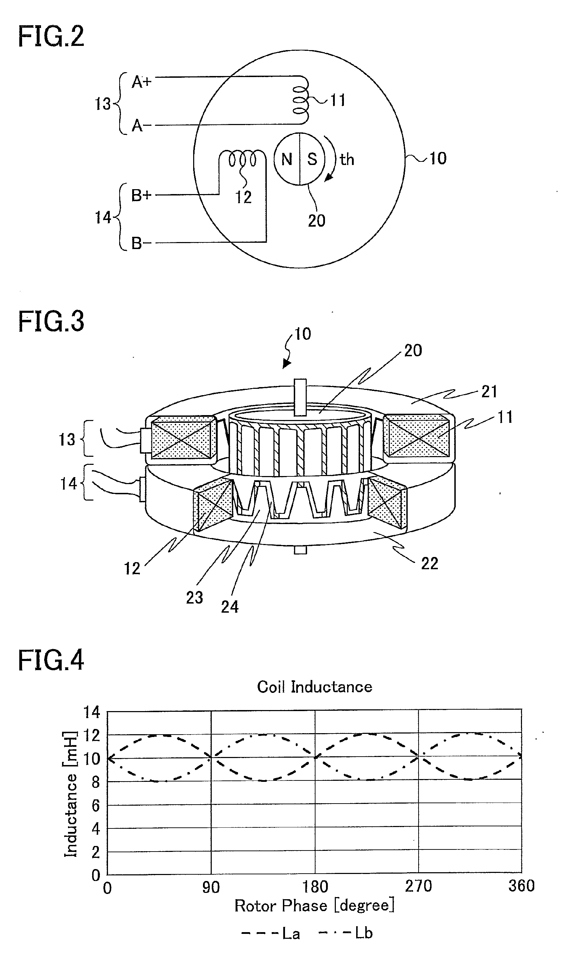

Next, the motor 10 will be described with reference to FIGS. 2 to 4. FIG. 2 is a diagram showing a structure of a stepping motor 10.

As shown in FIG. 2, the motor 10 includes an A-phase coil (armature coil) 11, a B-phase coil (armature coil) 12, and a rotor 20. In the motor 10 of this embodiment, the A-phase coil 11 includes an A+ terminal and an A- terminal as A-phase coil terminals 13. The B-phase coil 12 includes a B+ terminal and a B- terminal as B-phase coil terminals 14. In this embodiment, the A-phase coil 11 and the B-phase coil 12 are not connected to each other, but are arranged independently. The rotor 20 is arranged by disposing permanent magnets on the periphery thereof or magnetizing the permanent magnets on the periphery thereof.

In the motor 10, the A-phase coil 11 and the B-phase coil 12 are arranged at 90-degree different positions relative to the direction of magnetic flux generated by the permanent magnets of the rotor 20. In the motor 10, the alternating current with 90-degree different phases is supplied to the A-phase coil 11 and the B-phase coil 12, so that the rotor 20 is rotated. Moreover, in the motor 10, if the alternating current supplied to the A-phase coil 11 and the B-phase coil 12 is fixed to a predetermined phase, the rotor 20 is maintained in a state of magnetic equilibrium.

FIG. 3 is a partial sectional view of the stepping motor 10. In the motor 10 shown in FIG. 3, the rotor 20 is subjected to multipolar magnetization.

The rotor 20 has a cylindrical form, and the permanent magnets are periodically magnetized on the cylindrical surface. The A-phase coil 11 is wound around the outer periphery of the rotor 20 in an annular formation. The A-phase coil terminals 13 are taken out.

The A-phase coil 11 is surrounded by a conductor 21. The conductor 21 is disposed to surround the A-phase coil 11. Portions of the conductor 21 extend in one direction of the A-phase coil 11 (the up direction in FIG. 3) from the inside of the conductor 21 (the rotor surface side) like claws. These conductor portions are called inductors (claw poles) 23. The claw poles 23 have a pitch equal to the pitch of the magnetization pole pairs of the rotor 20, and the claw poles 23 form an N-pole or S-pole core according to the direction of the coil current.

Similar claw poles 24 also extend in the other direction of the A-phase coil 11 (the down direction in FIG. 3) from the inside of the conductor 21, and the claw poles 24 form a polar core whose polarity is opposite to that of the claw poles 23, according to the direction of the coil current.

In the example of FIG. 3, the claw poles 23 and 24 are illustrated as being formed on the B-phase coil 12 side. Similarly, the claw poles 23 and 24 are also formed on the A-phase coil 11 side.

The B-phase coil 12 and the B-phase coil terminals 14 are essentially the same as the A-phase coil 11 and the A-phase coil terminals 13 described above. The B-phase coil 12 is surrounded by a conductor 22. The conductor 22 includes the upward claw poles 23 and the downward claw poles 24 which are essentially the same as corresponding elements of the conductor 21 described above.

In this embodiment, when one cycle of the magnetic pole pairs of the rotor 20 is considered as 360 degrees (electrical angle), the claw poles 23 and 24 of A phase and the claw poles 23 and 24 of B phase are shifted by 90 degrees. By this arrangement, the motor 10 shown in FIG. 3 has the structure including the two-phase coils, which are equivalent to the A-phase coil 11 and the B-phase coil 12 shown in FIG. 2, and the multipolar magnetization rotor.

FIG. 4 is a diagram for explaining a relationship between a coil inductance of the motor 10 and a phase angle of the rotor 20. In FIG. 4, the axis of abscissa indicates a phase angle of the rotor 20 expressed by an electrical angle. The rotor phase angle is measured in degrees. The following Equation 3 represents a relationship between an electrical angle and a mechanical angle of the rotor 20.

```
Equation 3:

      Electrical Angle = Rotor's Mechanical Angle x



      The Number of Magnetization Pole Pairs
```

In FIG. 4, the axis of ordinate indicates a coil inductance measured in mH (millihenry), the dashed line "La" indicates a coil inductance of the A-phase coil 11, and the one-dot dashed line "Lb" indicates a coil inductance of the B phase coil 12.

The magnetic characteristic of the claw-pole type PM (permanent magnet) stepping motor 10 shown in FIG. 3 changes according to the relationship between the magnetized rotor phase angle and the claw pole phase angle. It is observed that the coil inductance periodically changes according to the rotor phase angle (electrical angle). This characteristic of the stepping motor is called saliency.

Hereinafter, it is assumed that the coil inductance of the motor 10 changes according to two cycles of a sinusoidal waveform per 360 degrees of the electrical angle (equivalent to one pitch of the magnetization pole pairs of the rotor). Note that the cycles of the coil inductance changes, the amount of change thereof, and the form of the coil inductance changes are not limited to this embodiment.

Note that the motor structure in which the coil inductance changes shown in FIG. 4 are generated is not limited to the claw-pole type. For example, it is observed that the coil inductance changes according to the rotor phase angle also in a structure in which the magnets of the rotor are embedded in the inside of the cylindrical conductor instead of being disposed on the cylindrical surface. The claw-pole type PM stepping motor may be industrially produced with low cost because it is possible to simplify the winding of the coils and other components.

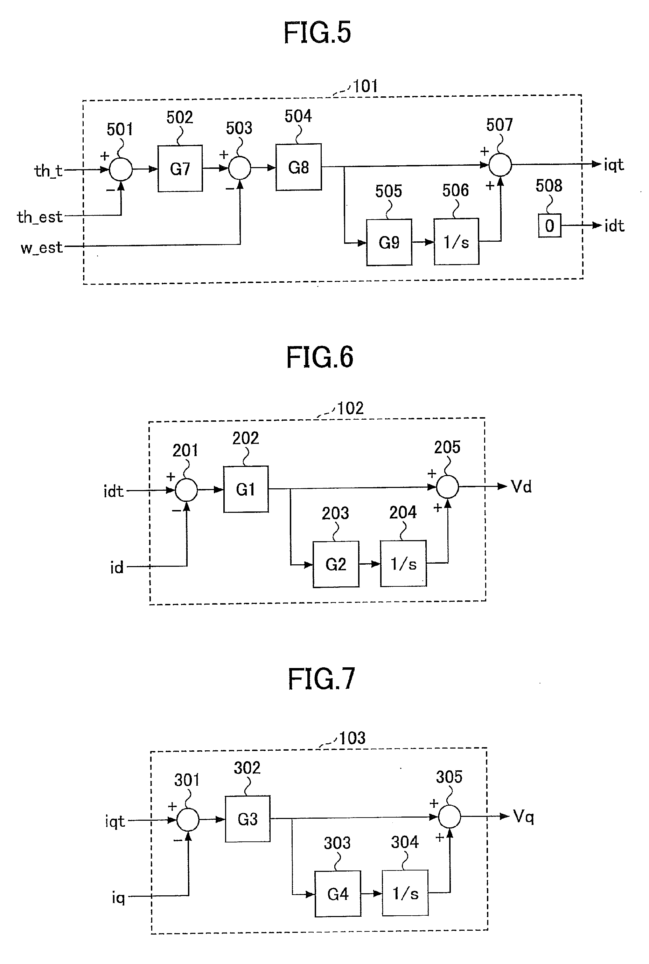

Next, the elements of the motor drive control apparatus 100 will be described. FIG. 5 is a diagram showing a configuration of the position feedback controller 101.

As shown in FIG. 5, the position feedback controller 101 includes subtractors 501 and 503, gain elements 502, 504 and 505, an integrator 506, an adder 507, and a fixed value generator 508.

The subtractor 501 subtracts the position information (angle) "th_est" from a target position instruction value "th_t" which is input to the position feedback controller 101. Namely, the subtractor 501 compares a target position with the current estimated position of the rotor 20 and outputs a position error indicating a difference between the target position and the current estimated position.

The gain element 502 amplifies the output (position error) of the subtractor 501 by a predetermined gain factor G7 and supplies the amplified position error to the second subtractor 503. In this embodiment, the output of the gain element 502 is equivalent to a target rotational speed of the rotor 20.

The subtractor 503 subtracts speed information "w_est" from the output of the gain element 502. The speed information "w_est" is speed information indicating the current rotational speed of the rotor 20. Namely, the subtractor 503 compares the target rotational speed and the current rotational speed of the rotor 20 and outputs a speed error indicating a difference between the target rotational speed and the current rotational speed.

The gain element 504 amplifies the output (speed error) of the subtractor 503 by a predetermined gain factor G8. The speed error amplified by the gain element 504 is supplied to each of the gain element 505 and the adder 507.

The gain element 505 amplifies the output of the gain element 504 by a predetermined gain factor G9 and supplies the amplified output to the integrator 506. The output of the integrator 506 (s: Laplace's operator) is supplied to the adder 507.

The adder 507 adds the output of the gain element 504 and the output of the integrator 506. Consequently, the position feedback controller 101 performs the following computations (which represent a transfer function) in response to the speed error and outputs a target amplitude value "iqt" of the drive current.

The computations performed by the position feedback controller 101 of the motor drive control apparatus 100 are as follows:

position error between target position and current estimated position of rotor 20 = th_t-th_est;
target rotational speed and current rotational speed of rotor 20 = position error x G7;
speed error between target rotational speed and current rotational speed of rotor 20 = target speed - speed information w_est; and
target amplitude value iqt of drive current = speed error x G8 x (1 + G9 x (1/s)).

In this embodiment, the feedback control of the rotational speed of the rotor 20 may be carried out by the inside loop portion of the position feedback controller 101. Hence, the control of the position of the rotor 20 may be easily stabilized.

In this embodiment, the feedback control of the rotational speed is the proportional-integral control, and accurate speed control may be performed without causing a steady speed error. Moreover, in this embodiment, when the position of the rotor 20 reaches the target position and the motor 10 is standing still, the target rotational speed is reset to 0, and neither a steady speed error nor a deviation from the target position arises.

Note that the target amplitude value "iqt" of the drive current may be computed using the amplification of the position error only. In this case, the computation using the speed error "w_est" is not mandatory. In a case where the target amplitude value "iqt" is computed using the amplification of the position error only, the target amplitude value "iqt" of the drive current obtained from the position error by, for example, the known PID (proportional-integral-derivative) computation may be used.

In this embodiment, the target amplitude values "idt" and "iqt" are equivalent to the d-axis drive current and the q-axis drive current in the vector control. The q-axis drive current indicates the torque. Hence, it is known that, in a simplified motor drive control method, only the q-axis drive current is controlled and the d-axis drive current is set to 0. In this embodiment, the above-described method is used, and the target amplitude value "idt" of the d-axis drive current is fixed to zero by using the fixed value generator 508.

Next, the d-axis current controller 102 and the q-axis current controller 103 will be described with reference to FIG. 6 and FIG. 7.

FIG. 6 is a diagram showing a configuration of the d-axis current controller 102. FIG. 7 is a diagram showing a configuration of the q-axis current controller 103.

As shown in FIG. 6, the d-axis current controller 102 includes a subtractor 201, gain elements 202 and 203, an integrator 204, and an adder 205. As shown in FIG. 7, the q-axis current controller 103 includes a subtractor 301, gain elements 302 and 303, an integrator 304, and an adder 305.

Operation of the controller 102 shown in FIG. 6 and operation of the controller 103 shown in FIG. 7 are essentially the same as the above-described operation of the controller 101 shown in FIG. 5, and a description thereof will be omitted.

The computations (the transfer function expression) performed by the controller 102 shown in FIG. 6 and the controller 103 shown in FIG. 7 are as follows:

d-axis drive voltage Vd = (target amplitude value idt - d-axis current vector id) x G1 x (1 + G2 x (1/s)); and
q-axis drive voltage Vq = (target amplitude value iqt - q-axis current vector iq) x G3 x (1 + G4 x (1/s)).

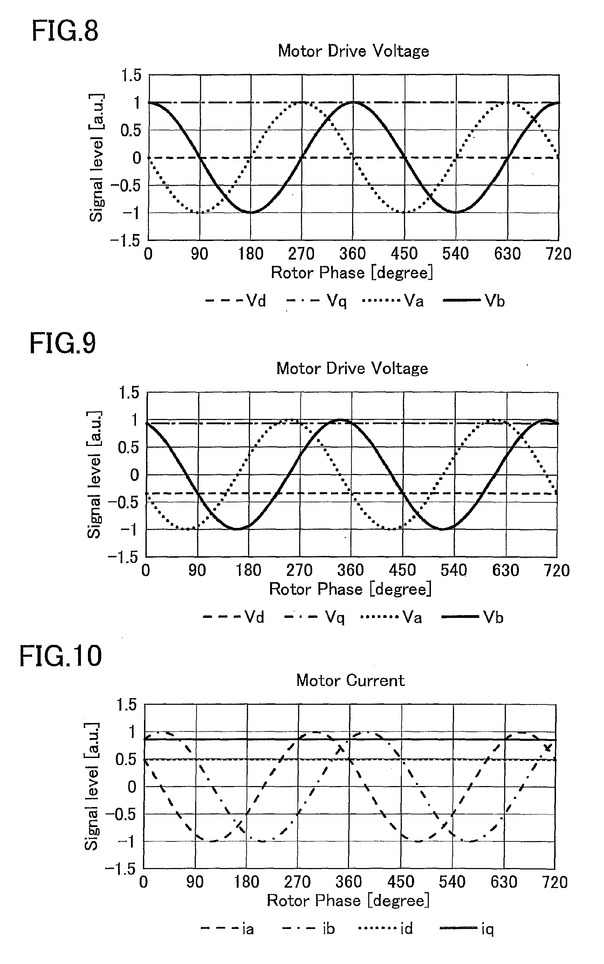

Next, the vector rotation units 106 and 107 will be described with reference to FIGS. 8, 9 and 10.

FIG. 8 is a diagram for explaining operation of the vector rotation unit 106. In FIG. 8, the axis of ordinate indicates an amplitude of voltage and the axis of abscissa indicates a phase angle "th" (electrical angle) of the rotor 20. Note that, in this embodiment, the actually used phase angle is not the phase angle of the rotor 20 but the position information "th_est" estimated by the position estimator 104. The position estimator 104 performs the estimation such that the position information "th_est" is equivalent to the rotor's phase angle "th", and the position information "th_est" may be used instead of the phase angle "th".

In FIG. 8, the dashed line indicates the d-axis drive voltage "Vd". The drive voltage "Vd" shown in FIG. 8 is a signal on which the high frequency signal "Vh" is not superimposed.

In the example of FIG. 8, it is assumed that drive voltage Vd = 0 and drive voltage Vq = 1 (direct current), and the following relationship holds.

A-phase drive voltage vector Va = -sin(th)
B-phase drive voltage vector Vb = -cos(th)

In the example of FIG. 8, the A phase is advanced by 90 degrees from the B phase, and zero degrees of the A phase correspond to zero degrees of the rotor's reference phase (electrical angle). When drive voltage Vd = 0, the amplitude of each of the drive voltage vectors "Va" and "Vb" is determined by the signal level of the q-axis drive voltage "Vq".

FIG. 9 is a diagram for explaining operation of the vector rotation unit 106. In the example of FIG. 9, it is assumed that drive voltage Vd = 0.342 and drive voltage Vq =0.940. Note that the drive voltage "Vd" shown in FIG. 9 is a signal on which the high frequency signal "Vh" is not superimposed.

In the example of FIG. 9, the amplitude of each of the drive voltage vectors "Va" and "Vb" is equal to 1 and it is observed that the A phase is advanced by 20 degrees from the rotor's reference phase.

In this embodiment, the relationship between the drive voltage "Vd" and the drive voltage "Vq" is controlled based on the relationship between the d-axis current vector "id" of the d-axis current controller 102 and the q-axis current vector "iq" of the q-axis current controller 103. Hence, for example, if the rotational speed of the motor 10 increases and the phase lag of the detection current "ia" and the detection current "ib" becomes large, the drive voltages "Vd" and "Vq" are controlled so that the phase angle of each of the A-phase drive voltage vector "Va" and the B-phase drive voltage vector "Vb" is advanced. Hence, in this embodiment, the lowering of the efficiency due to the changes of the rotational speed of the motor 10 may be prevented. Note that the efficiency represents the ratio of the mechanical output to the input power supplied to the motor 10.

FIG. 10 is a diagram for explaining operation of the vector rotation unit 107. In the example of FIG. 10, it is assumed that drive voltage Vd = 0.342 and drive voltage Vq = 0.940 similar to the example of FIG. 9.

In the example of FIG. 10, the phase angle of each of the A-phase detection current "ia" and the B-phase detection current "ib" is delayed by 30 degrees (electrical angle) from the rotor's reference phase. In this case, the d-axis current vector "id" and the q-axis current vector "iq" are considered as direct current signals (id = 0.5 and iq = 0.866).

If the phase delay of the A-phase detection current "ia" and the B-phase detection current "ib" from the rotor's reference phase is 0 degrees, the current vectors are considered as direct current signals (id = 0 and iq = 1).

In other words, if the drive current is controlled in this embodiment so that the condition of id = 0 (the drive current's target amplitude value idt = 0) is met, the phase delay of the A-phase detection current "ia" and the B-phase detection current "ib" from the rotor's reference phase may be set to 0 degrees.

In this embodiment, the phase angle of the detection currents "ia" and "ib" may be shifted to the rotor's reference phase by setting the value of the d-axis current vector id (the value of the target amplitude value "idt" of the drive current) to a value other than zero. Hence, reluctance torque may be used by shifting the phase angle of the detection currents "ia" and "ib" from the reference phase of the rotor 20, and the power efficiency may be increased. Note that the reluctance torque is a torque when the coil magnet and the rotor conductor attract each other.

As described above, by using the d-axis current controller 102, the q-axis current controller 103, the vector rotation unit 106, and the vector rotation unit 107, the phase angle of the detection currents "ia" and "ib" may be controlled to have a predetermined relationship with the reference phase of the rotor 20.

In this embodiment, the alternating current signals "ia" and "ib" are converted into the d-axis and q-axis current signals as the direct current signals and the frequency range in which the current control is performed may be lowered. For example, when controlling the detection current signals "ia" and "ib" as the alternating current signals to follow the target signal, the current control must be performed in a frequency range sufficiently higher than the frequencies of the alternating current signals "ia" and "ib". In this case, the cost is raised. However, in this embodiment, the frequency range in which the control current is performed may be lowered and the cost may be reduced.

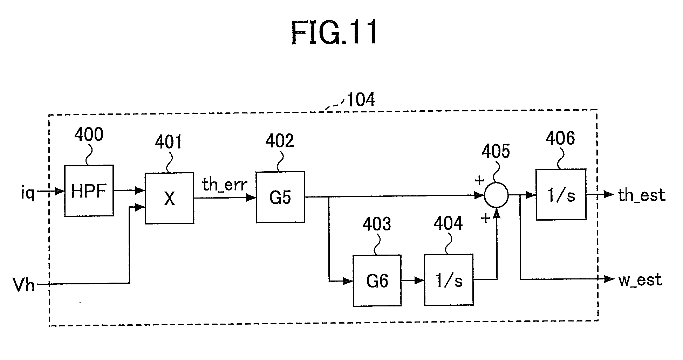

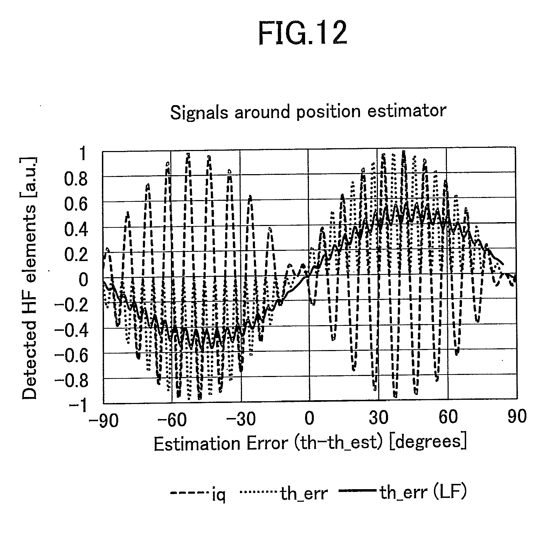

Next, the position estimator 104 will be described with reference to FIG. 11 and FIG. 12.

FIG. 11 is a diagram showing a configuration of the position estimator 104. As shown in FIG. 11, the position estimator 104 includes a high-pass filter 400, a multiplier 401, gain elements 402 and 403, integrators 404 and 406, and an adder 405.

The following Equation 4 represents the q-axis current vector "iq" using the high frequency signal "Vh" which is overlapped on the d-axis drive voltage "Vd".

Equation 4:

$$iq = K \times Vh \times \sin(2 \times (th - th\_est)) +$$

$$motor\ drive\ signal\ component$$

where "K" is a constant determined by the motor characteristic or the circuit constant, "Vh" is the high frequency signal which is overlapped on the drive voltage "Vd", "th" is the electrical angle indicating the current position of the rotor 20, and "th_est" is the position information (electrical angle) indicating the estimated position of the rotor 20.

In Equation 4, the first term expresses the signal component in which the high frequency component is modulated by the estimated error according to AM (amplitude modulation). The estimated error is obtained by subtracting the estimated position of the rotor 20 from the current position of the rotor 20, and is represented by sin(2 x (th - th_est)).

In Equation 4, the second term expresses the motor drive signal component for controlling the drive of the motor 10. Hence, if the estimated error is extracted (demodulation) from the first term of Equation 4, the position information indicating the estimated position of the rotor 20 may be acquired.

In the position estimator 104, the high-pass filter 400 is used to pass only the high frequency component of the q-axis current vector "iq" received from the vector rotation unit 107. Hence, the motor drive signal component in the second term of Equation 4 is removed, and only the first term of Equation 4 remains.

In the position estimator 104, the multiplier 401 multiplies the high frequency component of the q axis drive current vector "iq" by the high frequency signal "Vh" received from the high frequency generator 108, and outputs the estimated position error "th_err".

Although the estimated position error "th_err" includes the high frequency component, the estimated error sin(2 x (th - th_est)) is included in the low frequency component of the estimated position error "th_err". Hence, in this embodiment, the low frequency component of the estimated position error "th_err" is extracted by the position estimator 104.

The position estimator 104 performs the proportional-integral control using the gain elements 402 and 403, the integrator 404, and the adder 405. In the position estimator 104, the output of the adder 404 is output as the estimated speed "w_est".

Moreover, the output of the adder 404 is supplied to the integrator 406. The integrator 406 computes an integral of the estimated speed "w_est", and outputs the integral of the estimated speed "w_est" as the position information "th_est". This position information "th_est" is an electrical angle indicating the current estimated position of the rotor 20.

The above-described computation may be expressed by a transfer function as follows.

$$w\_est = th\_err \times G5 \times (1 + G6 \times (1/s))$$

$$th\_est = w\_est \times (1/s)$$

In the position estimator 104, "th_est" is supplied to the vector rotation unit 106, and "th_est" is fed back to the first term of Equation 4. Hence, in the position estimator 104, the gain elements 402, 403, the integrator 404, the adder 405, and the integrator 406 function as a feedback controller to perform feedback control regarding the position estimation computation. In this embodiment, this feedback controller also functions as a low pass filter, and the high frequency component included in the estimated position error "th_err" is removed.

FIG. 12 is a diagram showing a signal waveform of the estimated position error "th_err" and the q-axis current vector.

In FIG. 12, the axis of abscissa indicates an estimation error (th - th_est) (electrical angle). In the example of FIG. 12, it is assumed that the motor drive signal component (the second term of Equation 4) of the q-axis current vector "iq" is already removed.

In FIG. 12, the dashed line indicates the high frequency component (response signal) of the q-axis current vector "iq". In the high frequency component, the high frequency signal "Vh" is modulated by the estimated error sin(2 x (th - th_est)) according to AM.

In FIG. 12, the dotted line indicates the estimated position error "th_err" which is the result of multiplication of the high frequency signal "Vh" and the high frequency component of the q-axis current vector "iq".

In the example of FIG. 12, the high frequency component remains in the estimated position error "th_err". It is observed that, when the estimation error (th - th_est) has a positive value, the estimated position error "th_err" also has a positive value, and when the estimation error (th - th_est) has a negative value, the estimated position error "th_err" also has a negative value. Note that the estimation error (th - th_est) is obtained by subtracting from the current position of the rotor the position of the rotor estimated by the position estimator 104, and indicates an error between the estimated position estimated by the position estimator 104 and the actual position of the rotor 20.

Hence, in the example of FIG. 12, it is observed that, when the estimation error (th - th_est) and the estimated position error "th_err" are in agreement, the estimated position of the rotor 20 and the current position of the rotor 20 are in agreement.

As described above, in this embodiment, the feedback control of the estimated position error "th_err" by the position estimator 104 is used, and the error between the estimated position estimated by the position estimator 104 and the actual position of the rotor 20, i.e., the estimated position error, may be set to zero. Hence, the position estimator 104 may cause the position information "th_est" of the rotor 20 to converge at the position where the estimated position estimated by the position estimator 104 and the actual position of the rotor 20 are in agreement.

In FIG. 12, the solid line indicates a case in which the estimated position error "th_err" is subjected to a low pass filter. Although the high frequency component remains on the solid line, it is observed that the signal waveform approximates the form of the estimated error sin(2 x (th - th_est)). In this embodiment, the feedback controller (the gain elements 402, 403, the integrator 404, the adder 405, and the integrator 406) of the position estimator 104 function as a low pass filter, and the high frequency component is removed as indicated by the solid line.

In the above embodiment, the position estimator 104 includes the high-pass filter 400. However, the invention is not limited to this embodiment. Alternatively, the position estimator 104 may be adapted to include no high-pass filter 400.

When the position estimator 104 is adapted to include no high-pass filter 400, the estimated position error "th_err" is represented by the following Equation 5.

Equation 5:

$$th\_err = K \times Vh^2 \times \sin(2 \times (th - th\_est)) +$$

$$Vh \times motor\ drive\ signal\ component$$

In Equation 5, the first term is similar to that in the case of the position estimator 104 including the high-pass filter 400, and the low frequency component of the first term includes the estimated error of "sin(2 x (th - th_est))". In the second term of Equation 5, the high frequency component multiplied by the high frequency signal "Vh" is included. This high frequency component is removed by the function of the low-pass filter included in the position estimator 104.

As described above, the high-pass filter 400 is not mandatory, but it is preferred that the position estimator 104 includes the high-pass filter 400 because of the following reason.

In this embodiment, if the position estimator 103 does not include the high-pass filter 400, controlling signals in a wide frequency range from high frequencies to low frequencies is required by using the elements of the position estimator 104 other than the high-pass filter 400. In this case, some restrictions will arise in the design of the gain element or the like for the feedback control of the position estimator 104.

On the other hand, if the position estimator 103 includes the high-pass filter 400, the motor drive signal component may be reduced beforehand, and the degree of freedom of the design for the feedback control will be increased and the accuracy of estimation of the position of the rotor 20 as a whole will be increased.

Moreover, if the high frequency signal "Vh" is a square wave signal, the signal of the q-axis current vector "iq" may be made to a square wave signal by sampling the signal of the q-axis current vector "iq" at edges of the high frequency signal "Vh". In this case, the estimated error may be extracted without using a high-pass filter. Here, the high frequency signal "Vh" which is a square wave signal having an amplitude of one is represented by the formula: $Vh = (-1)^n$ where n is a sample number (0, 1, 2, 3, ...). The first term of the sampled q-axis current vector "iq" is represented by the formula:

$$iq = K \times (-1)^n \times \sin(2 \times (th - th\_est)).$$

Multiplying the above formula by the high frequency signal "Vh" (square wave) yields the following:

$$th\_err = K \times \sin(2 \times (th - th\_est)).$$

Hence, it can be understood from this formula that the estimated position error "th_err" may be extracted without using a low pass filter. The generation of this square wave signal is easy, the multiplication is also easily computed only by including the logic of a sign, and the high-speed processing with low cost may be implemented.

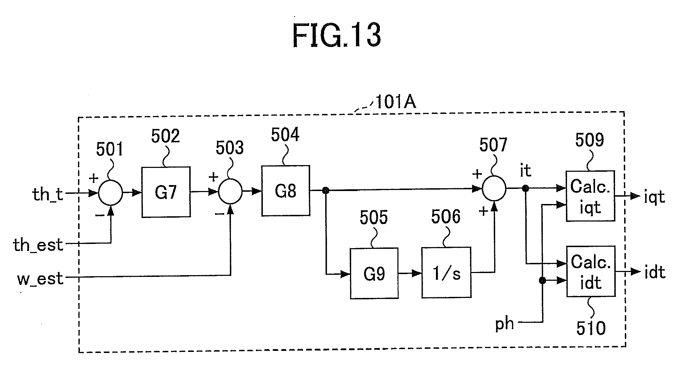

Next, a modification of the position feedback controller 101 will be described with reference to FIG. 13. FIG. 13 is a diagram showing a configuration of a position feedback controller 101A as another example of the position feedback controller 101. As shown in FIG. 13, the position feedback controller 101A includes a q-axis target current computation unit 509 and a d-axis target current computation unit 510 in addition to the elements of the position feedback controller 101 except the fixed value generator 508.

The q-axis target current computation unit 509 computes a target amplitude value "iqt" of the q-axis drive current based on the target current amplitude "it" (which is the output of the adder 507) and a target phase "ph". The computation of the target amplitude value "iqt" performed by the q-axis target current computation unit 509 is represented by: $iqt = it \times \tan(ph) / \sqrt{1 + \tan(ph)^2}$.

The d-axis target current computation unit 510 computes a target amplitude value "idt" of the d-axis drive current based on the target current amplitude "it" (which is the output of the adder 507) and the target phase "ph". The computation of the target amplitude value "idt" performed by the d-axis target current computation unit 510 is represented by: $idt = it / \sqrt{1 + \tan(ph)^2}$. Note that the target phase "ph" indicated in FIG. 13 is a phase difference (angle of lead) between a reference phase for the A-phase detection current vector "ia" and the B-phase detection current vector "ib" and a reference phase of the rotor 20.

In the above-described computations, if the target phase "ph" is determined beforehand, the "$\tan(ph)/\sqrt{1 + \tan(ph)^2}$" and the "$\sqrt{1 + \tan(ph)^2}$" may be easily implemented. By determining the target phase "ph" beforehand, in a case of a motor in which the reluctance torque may be used, the operation of the motor drive control apparatus 100 may be made more efficient.

As described above, in the motor drive control apparatus 100 of this embodiment, the position estimator 104 receives position information indicating an estimated position of the rotor in the motor 10 based on a response signal to the high frequency component detected by the current sensors 111 and 112. This response signal includes, as the carrier, the high frequency signal "Vh" which is superimposed on the driving signal to be supplied to drive the motor 10.

Hence, in the motor drive control apparatus 100 of this embodiment, even when the response signal, even if it is weak and difficult to detect by the current sensors 111 and 112, is supplied to the motor 10, the response signal to the high frequency component may be detected and the estimated position of the rotor 20 may be obtained.

Therefore, according to this embodiment, for example, when the motor rotation is stopped, or when the rotational speed of the motor 10 is low, the closed loop control may be maintained and the power consumption due to the performance of the open loop control may be reduced.

Moreover, in this embodiment, even when the motor 10 is a stepping motor, the drive current may be controlled in a full speed range according to the load, occurrence of step out may be prevented, and the motor may be efficiently driven.

In the foregoing, the two-phase stepping motor 10 has been described. The invention is not limited to this embodiment. For example, the invention is applicable to a three-phase stepping motor.

[Second Embodiment]

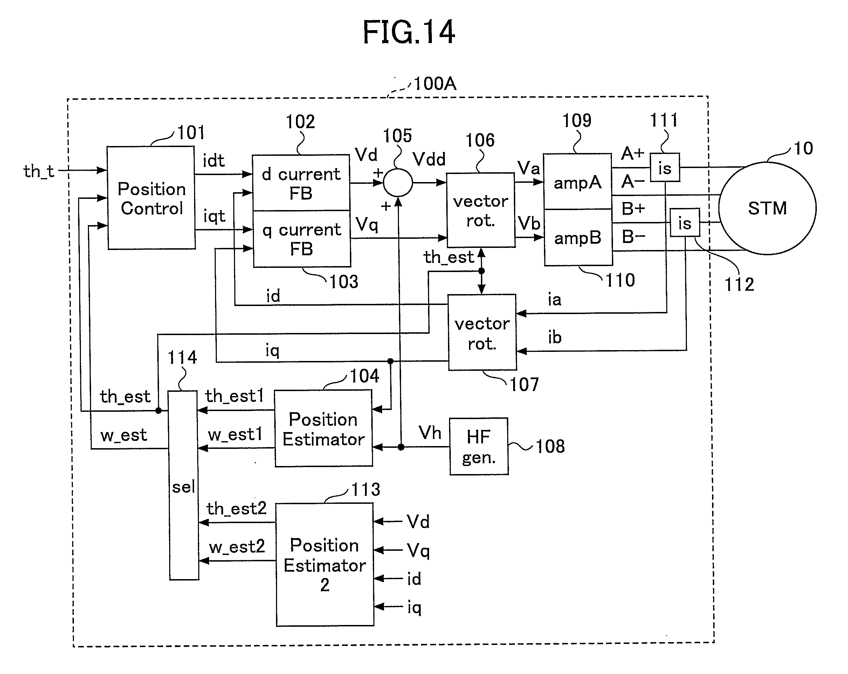

Next, a motor drive control apparatus 100A according to a second embodiment will be described with reference to FIG. 14. The second embodiment differs from the first embodiment in that when the rotational speed of the motor is lower than a predetermined speed, the rotor position estimation of the first embodiment is applied. In the second embodiment, the elements which are essentially the same as corresponding elements in the first embodiment are designated by the same reference numerals, and a description thereof will be omitted.

FIG. 14 is a diagram showing the motor drive control apparatus 100A according to the second embodiment. As shown in FIG. 14, the motor drive control apparatus 100A includes a position estimator 113 and a selector 114, in addition to all the elements of the motor drive control apparatus 100 according to the first embodiment.

Note that, in FIG. 14, the position information and the speed information output from the position estimator 104 are indicated by "th_est1" and "w_est1", respectively.

In the motor drive control apparatus 100A, the position estimator 113 estimates a position and a rotational speed of the rotor 20 based on the d-axis drive voltage "Vd", the q-axis drive voltage "Vq", the d-axis current vector "id", and the q-axis current vector "iq", without using the high frequency signal "Vh", and outputs position information "th_est2" and speed information "w_est2".

Specifically, the motor drive control apparatus 100A estimates the induction voltage, the d-axis current vector "id", and the q-axis current vector "iq" from the drive voltages "Vd" and "Vq" based on the mathematical model of the motor 10, the position information "th_est2", and the speed information "w_est2". The motor drive control apparatus 100A corrects the position information "th_est2" and the speed information "w_est2" at any time so that the estimated current vector and the actual current vector are in agreement with each other.

This method is known as in Japanese Laid-Open Patent Publication No. 2009-213244 and in "Sensorless Brushless DC Motor Drives Using Current Estimation Error" (T. Takeshita, et al., T. IEE Japan, Vol. 115-D, No. 4, 1995).

The selector 114 in this embodiment selects one of the output of the position estimator 104 and the output of the position estimator 113 for the input of the position feedback controller 101.

The selection of the position estimator output by the selector 114 is described. When the value (the rotational speed) indicated by the speed information "w_est" is less than or equal to a predetermined value, the selector 114 selects the output of the position estimator 104 for the input of the position feedback controller 101 so that "w_est" = "w_est1" and "th_est" = "th_est1" are set. On the other hand, when the value indicated by the speed information "w_est" is greater than the predetermined value, the selector 114 selects the output of the position estimator 113 for the input of the position feedback controller 101 so that "w_est" - "w_est2" and "th_est" = "th_est2" are set. For example, the predetermined value is about 5 Hz.

Hence, the selector 114 selects the output of the position estimator 104 when the rotational speed of the motor 10 is lower than the predetermined value.

In this embodiment, the position estimation of the rotor 20 may be performed by the position estimator 104 even when the motor rotation is stopped, or when the rotational speed of the motor 10 is low (such as a starting rotational speed), keeping the motor 10 at rest is possible and starting the motor 10 quickly and stably is possible.

The selector 114 selects the output of the position estimator 113 when the rotational speed of the motor 10 is greater than the predetermined value. The position estimator 113 estimates the position of the rotor 20 by the known method based on the induction voltage estimation without using the high frequency signal.

Hence, the position estimator 113 may easily estimate the position of the rotor 20 also when the rotational speed of the motor 10 is high and the separation of the motor drive signal component and the high frequency component is not needed.

As described above, in this embodiment, one of the output of the position estimator 104 and the output of the position estimator 113 is selected according to the rotational speed of the motor 10 for the input of the position feedback controller 101, and the problem when the rotational speed of the motor 10 is high, as well as the problem when the rotational speed of the motor 10 is low or the motor rotation is stopped may be eliminated.

For example, when the rotational speed of the motor 10 is high, the problem arises in the position estimator 104 that the frequency of the drive signal approaches the frequency of the high frequency component and the separation of the high frequency component will be difficult. When the rotational speed of the motor 10 is low, or when the motor rotation is stopped, the problem arises in the position estimator 113 that the drive current becomes weak and the detection of the drive current supplied to the motor 10 will be difficult.

In this embodiment, one of the output of the position estimator 104 and the output of the position estimator 113 is selected according to the rotational speed of the motor 10, and the advantage of the selected position estimator may be used and the drive current may be controlled in a full speed range accurately and stably.

Note that, in this embodiment, when the selector 114 selects the output of the position estimator 113, the operation of the high frequency generator 108 may be stopped.

[Third Embodiment]

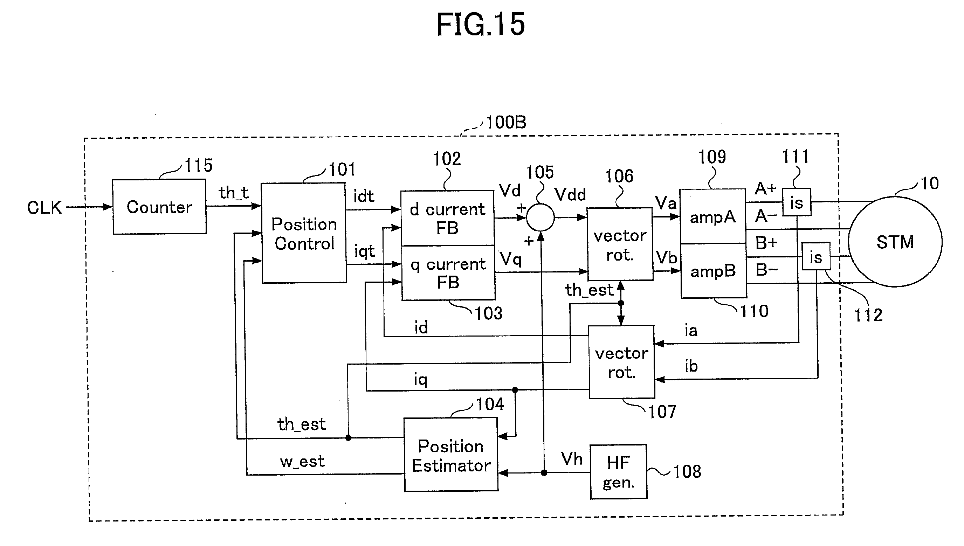

Next, a motor drive control apparatus 100B according to a third embodiment will be described with reference to FIG. 15. The third embodiment differs from the first embodiment in that a counter is arranged on the input side of the position feedback controller 101. In the third embodiment, the elements which are essentially the same as corresponding elements in the first embodiment are designated by the same reference numerals, and a description thereof will be omitted.

FIG. 15 is a diagram showing the motor drive control apparatus 100B according to the third embodiment. As shown in FIG. 15, the motor drive control apparatus 100B includes a counter 115 arranged on the input side of the position feedback controller 101, in addition to all the elements of the motor drive control apparatus 100 according to the first embodiment.

The counter 115 counts a train of pulses (clocks) received from an external device and outputs a target position instruction value "th_t". Namely, the counter 115 functions as an instruction value generator to generate a target position instruction value.

Other functions and operation of the motor drive control apparatus 100B are essentially the same as those of the motor drive control apparatus according to the first embodiment. Note that the external device may be a host apparatus of the motor drive control apparatus 100B.

In the stepping motor control method according to the related art, the open loop control is used and A-phase and B-phase exciting current waveforms are directly generated by counting the pulses. Moreover, in this stepping motor control method, when there is no step out, a rotational speed of a motor is determined to be proportional to a frequency of the pulses and the position of the rotor of the motor is controlled based on a number of the pulses.

In this embodiment, the counter 115 is arranged to output the target position instruction value, and the rotational speed of the motor and the position of the rotor may be controlled by using the train of pulses the form of which is the same as that of the stepping motor control method of the related art based on the open loop control.

For this reason, the present embodiment may be applied to the existing products without changing the host apparatus and system. Hence, the motor drive control apparatus 100B of this embodiment may be provided for general purpose use, the installation cost and period may be reduced, and short-term, wide deployment of products is possible.

As described in the foregoing, the motor drive control apparatus and method according to the invention may contribute to reduction of the power consumption.

The motor drive control apparatus and method according to the invention are not limited to the above-described embodiments, and variations and modifications may be made without departing from the scope of the invention.

The present application is based upon and claims the benefit of priority of Japanese Patent Application No. 2014-167579, filed on August 20, 2014, the contents of which are incorporated herein by reference in their entirety.

**Claims**

**1.** A motor drive control apparatus which supplies drive currents including orthogonal alternating current components to armature coils of a motor so that a magnetized rotor is rotated, comprising:

a high frequency generator that generates a high frequency signal which is superimposed on one of the drive currents;
a position estimator that receives position information indicating an estimated position of the rotor based on a response signal to the high frequency signal; and
an amplitude controller that controls amplitudes of the drive currents according to the position information.

**2.** The motor drive control apparatus according to claim 1, wherein:

the high frequency generator generates a high frequency signal including an alternating current component having a frequency higher than a product of a rotational speed of the rotor and a number of magnetic pole pairs, and
the position estimator receives as the position information a phase angle of the rotor based on response signals to the high frequency signal from the armature coils.

**3.** The motor drive control apparatus according to claim 1 or 2, wherein the amplitude controller includes:

a target instruction value generator that generates a target position instruction value indicating a target position of the rotor; and
a position feedback controller that generates a target amplitude value of the drive currents based on a result of comparison between the target position instruction value and the position information.

4. The motor drive control apparatus according to claim 3, wherein the target instruction value generator receives a train of pulses from an external device and generates the target position instruction value based on a number of the pulses.

5. The motor drive control apparatus according to claim 3 or 4, further comprising:

a phase controller that controls a phase angle of each of the drive currents based on the position information to have a predetermined relationship between the phase angle of each of the drive currents and a phase angle of the rotor;
a first converter that performs a rotation of each of detection currents including the drive currents and the response signal based on the position information, and outputs direct current signals based on the detection currents;
a current controller that computes direct current drive voltages based on a result of comparison between the direct current signals and the target amplitude value; and
a second converter that performs a rotation of each of the direct current drive voltages based on the position information, and outputs alternating current drive voltages based on the direct current drive voltages.

6. A motor drive control method for use in a motor drive control apparatus which supplies drive current including orthogonal alternating current components to armature coils of a motor so that a magnetized rotor is rotated, comprising:

generating a high frequency signal which is superimposed on one of the drive currents;
receiving position information indicating an estimated position of the rotor based on a response signal to the high frequency signal; and
controlling amplitudes of the drive currents according to the position information.

# FIG.1

EP 2 988 411 A1

## FIG.2

## FIG.3

## FIG.4

Coil Inductance

Rotor Phase [degree]

— — —La    — · —Lb

# FIG.5

# FIG.6

# FIG.7

**FIG.8**

Motor Drive Voltage

- - - Vd    - · - Vq    ······· Va    —— Vb

**FIG.9**

Motor Drive Voltage

- - - Vd    - · - Vq    ······· Va    —— Vb

**FIG.10**

Motor Current

- - - ia    - · - ib    ······· id    —— iq

# FIG.11

# FIG.12

Signals around position estimator

----- iq ········ th_err ——— th_err (LF)

# FIG.13

# FIG.14

EP 2 988 411 A1

FIG.15

Europäisches
Patentamt

European
Patent Office

Office européen
des brevets

## EUROPEAN SEARCH REPORT

Application Number

EP 15 18 1283

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/049202 A1 (FUKUMARU SHINGO [JP] ET AL) 20 February 2014 (2014-02-20) | 1,2,4-6 | INV. H02P6/18 H02P8/14 |
| Y | * paragraphs [0032], [0033], [0076]; figure 1 *<br>* paragraphs [0029], [0030] *<br>----- | 3 | |
| Y,D | JP 2009 213244 A (ORIENTAL MOTOR CO LTD) 17 September 2009 (2009-09-17)<br>* paragraph [0024] - paragraph [0026]; figure 1 *<br>----- | 3 | |

TECHNICAL FIELDS
SEARCHED      (IPC)

H02P

The present search report has been drawn up for all claims

| Place of search | Date of completion of the search | Examiner |
|---|---|---|
| Munich | 9 December 2015 | Schürle, Patrick |

EPO FORM 1503 03.82 (P04C01)

## ANNEX TO THE EUROPEAN SEARCH REPORT
## ON EUROPEAN PATENT APPLICATION NO.

EP 15 18 1283

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2015

| Patent document cited in search report | Publication date | Patent family member(s) | Publication date |
|---|---|---|---|
| US 2014049202 A1 | 20-02-2014 | BR 102013005561 A2 | 07-07-2015 |
| | | CN 103595326 A | 19-02-2014 |
| | | EP 2698916 A2 | 19-02-2014 |
| | | JP 5644820 B2 | 24-12-2014 |
| | | JP 2014039414 A | 27-02-2014 |
| | | KR 20140023203 A | 26-02-2014 |
| | | TW 201409926 A | 01-03-2014 |
| | | US 2014049202 A1 | 20-02-2014 |
| JP 2009213244 A | 17-09-2009 | JP 5078676 B2 | 21-11-2012 |
| | | JP 2009213244 A | 17-09-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009213244 A

- JP 2014167579 A

**Non-patent literature cited in the description**

- **T. TAKESHITA et al.** Sensorless Brushless DC Motor Drives Using Current Estimation Error. *T. IEE Japan,* 1995, vol. 115-D (4